# EUROPÄISCHE PATENTSCHRIFT

(11) **EP 1 382 552 B1**
(45) Veröffentlichungstag und Bekanntmachung des Hinweises auf die Patenterteilung: **10.11.2004**
(21) Anmeldenummer: 03010990.4
(22) Anmeldetag: 16.05.2003
(51) Int. Cl.: B65G 15/58, B65G 15/04, B65G 17/32

(54) **Saugband für eine Fördervorrichtung zum insbesondere hängenden Transport von Werkstücken**
Suction belt for a conveyor, in particular for the suspended transport of workpieces
Bande à succion pour un convoyeur, en particulier pour le transport suspendu de pièces

(30) Priorität: 19.07.2002 DE 20211007 U
(43) Veröffentlichungstag der Anmeldung: 21.01.2004
(73) Patentinhaber: Sundwig GmbH, 58675 Hemer (DE)
(72) Erfinder: Erlewein, Meinrad, 77743 Neuried (DE); Schley, Udo, 77933 Lahr/Sulz (DE); Himmelsbach, Klemens, 77933 Lahr (DE)
(74) Vertreter: Kaiser, Magnus

(56) Entgegenhaltungen:
- DE-A- 3 120 823
- DE-U- 29 915 602
- FR-A- 2 047 373
- US-B1- 6 382 692

## Beschreibung

Die Erfindung betrifft ein Saugband für eine Fördervorrichtung zum insbesondere hängenden Transport von Werkstücken, umfassend einen Gurtkörper mit Unterdruck-Durchführungen und eine Anzahl von am Gurtkörper angebrachten Saugnäpfen, deren Innenflächen in Wirkverbindung mit den Unterdruck-Durchführungen stehen.

Insbesondere zum hängenden Transport von Werkstücken, wie Blechen und Platinen, werden solche Saugbänder schon seit längerem eingesetzt. Hierbei läuft das Saugband normalerweise um ein Gehäuse um, in dem Unterdruckkammern und gegebenenfalls auch die unterdruckerzeugenden Vorrichtungen, wie Vakuumpumpen oder Ejektoren, angeordnet sind. Die Unterdruckkammern stehen über Längskanäle in den Saugbandführungen mit den sich daran entlang bewegenden Unterdruck-Durchführungen im Gurtkörper in Verbindung, so dass letztendlich die Saugnäpfe nach Herstellen eines abdichtenden Kontakts mit der Werkstückoberfläche evakuiert werden, um die erforderliche Haltekraft für den Fördervorgang aufzubauen.

Ein Beispiel für ein solches Saugband an einer Fördervorrichtung zum hängenden Transport ist in der DE 198 23 582 A1 beschrieben. Dort sind Saugnäpfe jeweils direkt auf eine Unterdruck-Durchführung im Gurtkörper aufgesetzt und mit dem Gurtkörper verschweißt.

Eine große Schwierigkeit insbesondere bei Fördervorrichtungen zum hängenden Transport von Metallblechen besteht darin, dass bei einer Fehlfunktion hochstehende Bleche mit ihren Kanten auf den Saugnapf auftreffen und diesen hierdurch beschädigen oder abscheren können. Dies führt in aller Regel nicht nur zum Verlust der Haltekraft der Fördervorrichtung an dieser Stelle, sondern durch Ansaugen von Falschluft am zerstörten Saugnapf auch zum Zusammenbruch des Unterdrucks in der gesamten betroffenen Unterdruckkammer, so dass der Betrieb des Förderers insgesamt unterbrochen werden muss.

Um diesen Schwierigkeiten zu begegnen, gibt es im Stand der Technik unterschiedliche Ansätze. Ein Ansatz, der sich beispielsweise in der EP 0 827 918 A2 finden lässt, besteht darin, keine herkömmlichen Saugnäpfe zu verwenden, sondern eine weichelastische Schicht auf die Außenfläche des Gurtkörpers aufzubringen und durch Ausfräsungen in dieser weichelastischen Schicht Saugtaschen zu bilden, welche die Funktion von Saugnäpfen übernehmen. Ein anderer Ansatz ist beispielsweise in der EP 1 110 882 A1 zu finden. Dort werden die Dichtlippen der Saugnäpfe nach hinten abknickend erweitert, um zu verhindern, dass gegebenenfalls hochstehende Blechkanten hinter den Saugnapf gelangen und ihn abscheren.

Im Stand der Technik nach der DE 299 15 602 U1 wird einem Abscheren der Saugnäpfe dadurch begegnet, dass die Saugnäpfe außen nach hinten umgebogen sind, und dass zusätzlich auf der Außenfläche des Gurtkörpers Kontaktleisten aufgebracht sind, die höher als die nach hinten umgebogenen Außenkanten der Saugnäpfe über die Außenfläche des Gurtkörpers überstehen.

In der DE 299 15 602 U1 ist außerdem eine alternative Möglichkeit zur Befestigung der Saugnäpfe am Gurtkörper beschrieben: Statt die Saugnäpfe an den Gurtkörper anzuschweißen, werden sie an diesen angenietet. Da der hierfür vorgesehene Hohlniet den Gurtkörper durchgreift, wird der Gurtkörper an eben der Stelle, in der die Krafteinleitung beim hängenden Transport erfolgt, allerdings geschwächt, weshalb bei diesem Stand der Technik eine zusätzliche Verstärkung des Gurtkörpers in unmittelbarer Nachbarschaft zum Hohlniet vorgesehen ist. Der durch die Nietverbindung erzielte Vorteil einer leichteren Ersetzbarkeit eines etwa beschädigten Saugnapfs wird also dadurch erkauft, dass als Gurtkörper nicht ein normaler Zahnriemen verwendet werden kann, sondern eine wesentlich teurere Sonderanfertigung erforderlich ist. Noch ein Beispiel für ein solches Saugband an einer Fördervorrichtung zum hängenden Transport ist in der FR-A-2 047 373 beschrieben.

Ausgehend von diesem Stand der Technik liegt der Erfindung die Aufgabe zugrunde, ein Saugband der eingangs genannten Art so zu verbessern, dass bei einem falschen Auftreffen der zu fördernden Werkstücke auf einen der Saugnäpfe möglichst wenig Schaden entsteht, wobei die Herstellung des Saugbandes dennoch kostengünstig möglich sein soll.

Diese Aufgabe ist durch ein Saugband mit den Merkmalen des Patentanspruchs 1 gelöst. Vorteilhafte Ausgestaltungen sind in den Patentansprüchen 2 bis 8 enthalten.

Ein erfindungsgemäßes Saugband mit einem Gurtkörper, der Unterdruck-Durchführungen aufweist, und einer Anzahl von am Gurtkörper angebrachten Saugnäpfen, deren Innenflächen in Wirkverbindung mit den Unterdruck-Durchführungen stehen, ist also so ausgebildet, dass die Saugnäpfe nicht direkt am Gurtkörper angebracht sind, sondern dass Halteelemente für die Saugnäpfe vorgesehen sind, die auf die Außenfläche, also die Transportfläche des Gurtkörpers, aufgesetzt und dort mit diesem fest verbunden werden, vorzugsweise durch Kleben oder Aufschweißen. Hierdurch wird der Gurtkörper nicht geschwächt; im Gegenteil: Wenn die Halteelemente mit einem Fuß zur Befestigung an der Außenfläche des Gurtkörpers versehen sind, der entsprechend breit dimensioniert und steif ausgeführt ist, hat das Halteelement sogar eine zusätzlich stabilisierende Wirkung auf den Gurtkörper.

Die Saugnäpfe sind erfindungsgemäß lösbar an diesem Halteelement befestigt und zwar durch elastisches Hintergreifen von entsprechenden Ausformungen am Halteelement. Dies kann das Hintergreifen bzw. ringförmige Umgreifen eines Wulstes oder Halterings an einem im wesentlichen rohrförmigen Halteelement sein. Umgekehrt ist es aber auch möglich, das Halteelement ringförmig mit einem endständigen, nach innen vorspringenden Haltekragen auszubilden, in den der elastische Saugnapf eingesteckt wird. In beiden Fällen kann bei einer Fehlfunktion der Fördervorrichtung, bei der insbesondere eine Werkstückkante zwischen den Saugnapf und den Gurtkörper gelangt, höchstens der Saugnapf vom Halteelement abgezogen werden. Selbst wenn der Saugnapf hierdurch beschädigt worden ist, kann eine Bedienperson ohne Werkzeug zur Hand haben zu müssen einen Ersatzsaugnapf auf das Halteelement aufsetzen und die Fördervorrichtung nach einem vorteilhaft kurzen Stillstand wieder weiterbetreiben. Die entscheidenden Nachteile der bisher bekannten Saugnapfbefestigungen sind durch die Erfindung also eliminiert. Darüber hinaus ergibt sich durch die lösbare Befestigung der Saugnäpfe an den Halteelementen der zusätzliche Vorteil, dass ein erfindungsgemäßes Saugband mit geringstem Aufwand auf andere Saugnapfformen, insbesondere größere oder kleinere Saugnäpfe umgerüstet werden kann. Auch ein späteres Nachrüsten auf verbesserte Saugnapfmaterialien oder -formen ist hierdurch leicht möglich, ohne das gesamte Saugband ersetzen zu müssen.

Die Halteelemente sind vorzugsweise so ausgebildet, dass sie jeweils einen Saugkanal enthalten, der einerseits mit der entsprechenden Unterdruck-Durchführung im Gurtkörper verbunden ist, und andererseits im Boden des zugehörigen Saugnapfs mündet.

Weitere Vorteile ergeben sich, wenn die Halteelemente außer den Saugnäpfen keine lösbaren Teile aufweisen, insbesondere auch nicht mittels Schrauben, Nieten oder dergleichen am Gurtkörper angebracht sind. Denn auch normalerweise festsitzende Befestigungsschrauben können sich nach längerem Betrieb lösen oder gegebenenfalls auch durch Nachlässigkeiten bei der Montage oder der Wartung mit einem zu geringen Drehmoment angezogen worden sein, so dass sie sich nach einiger Zeit lösen können. Insbesondere beim hängenden Transport von Werkstücken mit empfindlichen Oberflächen, wie beispielsweise Blechen für die Automobilproduktion, können derartige Befestigungselemente, wenn sie unbeabsichtigt herausfallen und verlorengehen, großen Schaden verursachen.

Am einfachsten gestaltet sich die Anbringung der Saugnäpfe am erfindungsgemäßen Saugband, wenn die Haltelemente so ausgebildet sind, dass sie einen Schaft und einen demgegenüber vorspringenden Haltering umfassen, den die Saugnäpfe elastisch hintergreifen können. Eine solche nippel- oder nietenförmige Ausgestaltung des Halteelements gewährleistet einen sicheren Halt des Saugnapfs bei gleichzeitiger leichter Anbringbarkeit.

Die Böden der Saugnäpfe sind vorzugsweise mit Anschlagsnoppen oder einer Anschlagsfläche für die zu fördernden Werkstücke versehen, welche von der Mündung des Saugkanals des zugehörigen Halteelements beabstandet sind. Da das Haltelement in aller Regel aus hartem, widerstandsfähigem Material besteht, ist es vorteilhaft, wenn das Werkstück auch bei möglicherweise hohen Saugkräften nicht in Kontakt mit dem Saugkanal des Halteelements gelangt, um eine Gefahr des Zerkratzens der Werkstückoberfläche zu vermeiden. Die an sich nicht unbekannten Anschlagselemente im Boden des Saugnapfs können einen solchen Kontakt zuverlässig verhindern.

Auch wenn die Saugnäpfe eines erfindungsgemäßen Saugbands im Falle eines Falles ohne größeren Schaden von einem fehlgestellten Werkstück von ihren Halteelementen abgezogen werden können, kann es dennoch vorteilhaft sein, in Förderrichtung gesehen seitlich neben den Saugnäpfen widerstandsfähige Schutzleisten vorzusehen, die höher als die Halteelemente, aber weniger hoch als die Saugnäpfe über die Außenfläche des Gurtkörpers überstehen. Dies vermindert die Wahrscheinlichkeit, dass eine Werkstückkante zwischen den Saugnapf und den Gurtkörper gelangt. Daneben ergibt sich der Vorteil, dass die Halteelemente durch die seitlichen Schutzleisten zuverlässig vor einem unerwünschten Kontakt mit den Werkstücken geschützt sind. Eine Gefahr der Beschädigung der Halteelemente oder deren Befestigung am Gurtkörper scheidet somit höchst vorteilhaft aus.

Ein Ausführungsbeispiel der vorliegenden Erfindung wird im folgenden anhand der beigefügten Zeichnungen näher beschrieben und erläutert. Es zeigen:
- Figur 1: eine seitliche Schnittdarstellung eines Abschnitts einer Fördervorrichtung zum hängenden Transport von Blechen mit einem erfindungsgemäßen Saugband;
- Figur 2: einen Schnitt durch den unteren Teil der in Figur 1 gezeigten Vorrichtung, wobei die Schnittebene senkrecht zu derjenigen aus Figur 1 steht.

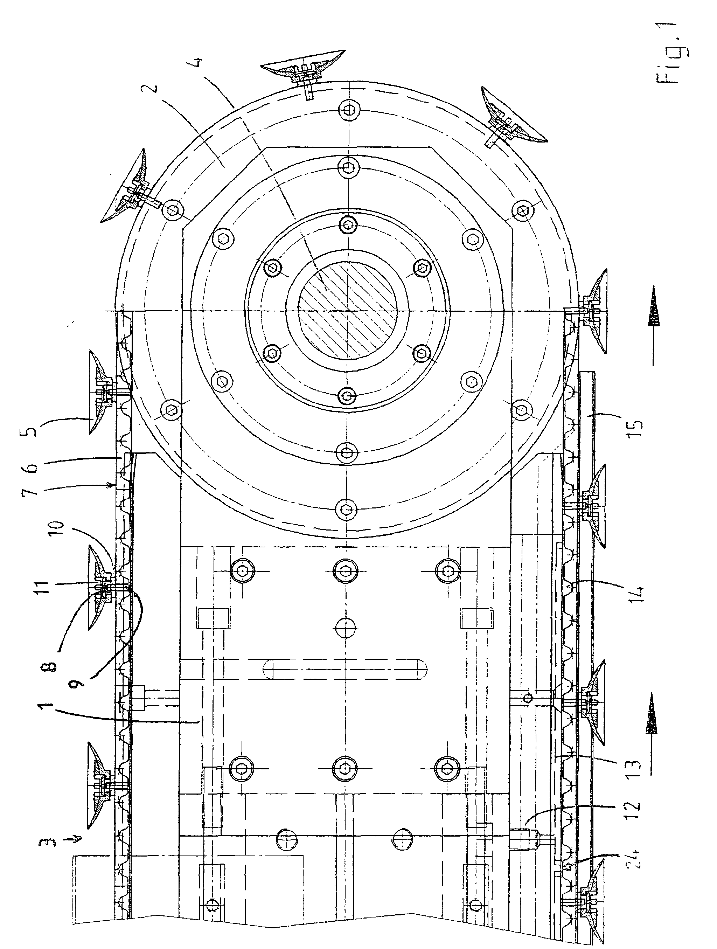

Figur 1 zeigt einen Teil einer Fördervorrichtung zum hängenden Transport von Blechen im Längsschnitt, welche Fördervorrichtung wiederum Teil einer Stapelanlage für Bleche ist, die hängend zum Stapelplatz transportiert und dort abgeworfen werden. Der in Figur 1 dargestellte Ausschnitt zeigt ein Ende eines Gehäuses 1, an das sich ein Antriebsrad 2 für ein um das Gehäuse 1 umlaufendes Saugband 3 anschließt. Das Antriebsrad 2 ist über eine gemeinsame Welle 4 mit weiteren Fördervorrichtungen verbunden, die zusammen an einer (nicht dargestellten) Staplerbrücke aufgehängt sind und dadurch eine Stapelvorrichtung bilden.

Das Saugband 3 besteht im wesentlichen aus einem normalen, in der Fördertechnik verbreitet eingesetzten, den Gurtkörper 6 bildenden Zahnriemen mit einer Anzahl von auf dessen Außenfläche 7 aufgesetzten Saugnäpfen 5. Jeder Saugnapf 5 ist mittels eines an der Außenfläche 7 des Gurtkörpers 6 angeschweißten Halteelements 8 mit einer Unterdruck-Durchführung 9 im Gurtkörper 6 verbunden, wobei die Verbindung über einen Saugkanal 10 im Inneren des Halteelements 8 erfolgt, welcher die Unterdruck-Durchführung 9 fortsetzt und im Boden 11 des Saugnapfs 5 mündet.

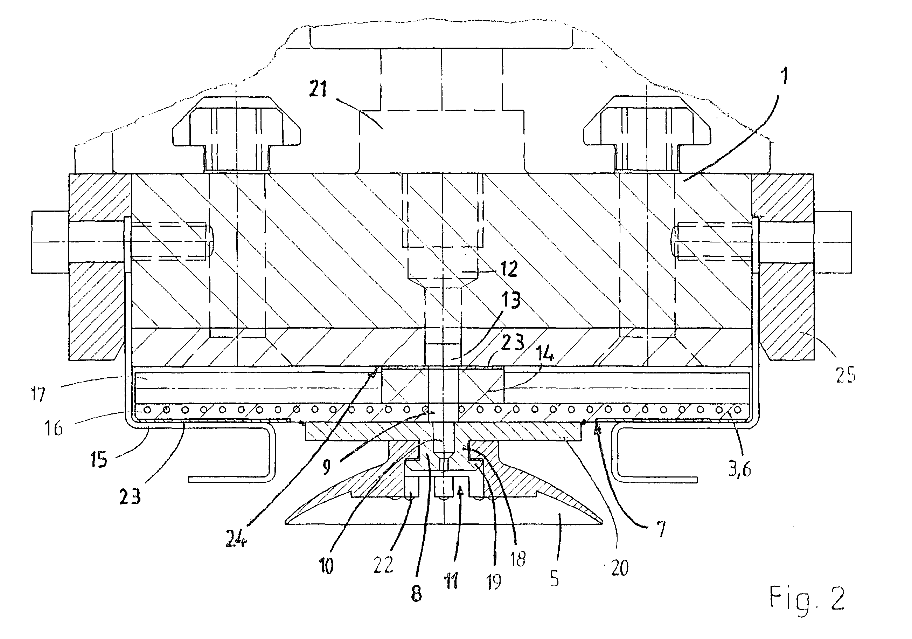

Im Inneren des Gehäuses 1 sind hier nicht näher dargestellte Unterdruckkammern vorgesehen, die über Absaugkanäle 12 mit sich längs des Förderwegs über etwa den Abstand zwischen zwei Saugnäpfen 5 erstreckenden Längskanälen 13 verbunden sind. Entlang dieser Längskanäle 13 bewegt sich nun das Saugband 3, dessen Rückseite mittig mit einer Dichteinlage 14 versehen ist, um das Eindringen von Falschluft durch die Zahnzwischenräume in die Längskanäle 13 zu verhindern. Durch den Gurtkörper 6, also den Zahnriemen und die Dichteinlage 14 hindurch, stellen die Unterdruck-Durchführungen 9 die Verbindung zwischen den Böden 11 der Saugnäpfe 5 und den Längskanälen 13 und somit letztendlich den Unterdruckkammern her, so dass die Saugnäpfe 5 dann, wenn ein Werkstück an deren Dichtlippen anliegt, von den Unterdruckkammern evakuiert werden. Seitlich neben den Saugnäpfen 5 wird das Saugband 3 von Umgriffleisten 15 gehalten, die aufgrund einer zweifachen Abkantung die Halteelemente 8 und die Saugnäpfe 5 schützen, wie anhand der Figur 2 besser zu sehen ist.

Figur 2 zeigt nun einen Schnitt durch den unteren Teil der in Figur 1 gezeigten Vorrichtung, wobei die Schnittebene senkrecht zur Papierebene der Figur 1 verläuft. Aufgrund der vergrößerten Darstellung ist die erfindungsgemäße Ausbildung des dargestellten Beispiels für ein Saugband 3 besser nachzuvollziehen:

Das dargestellte Saugband 3 besteht aus einem Gurtkörper 6, der sich aus einem stahlbewehrten Riemen 16 mit rückseitig angebrachten Zähnen 17 und einer mittig in die Zähne 17 längs eingesetzten Dichteinlage 14 zusammensetzt, und einer Anzahl von an Halteelementen 8 lösbar befestigten Saugnäpfen 5. Das Halteelement 8 ist mit einem zylindrischen Schaft 18 und einem demgegenüber vorspringenden Haltering 19 versehen, was ihm die Form eines Nietes verleiht. Über einen großflächigen Fuß 20 ist das Halteelement 8 an der Außenfläche 7 des Gurtkörpers 6 angeschweißt und somit mit diesem ohne Schwächung des Gurtkörpers fest verbunden. Der Saugnapf 5 hingegen besteht aus einem elastischen Material und ist auf das Halteelement 8 lediglich aufgesetzt, wobei er den Haltering 19 des Halteelements 8 elastisch passend hintergreift. Für eine hohe Stabilität sorgt, dass der Saugnapf 5 nicht nur den Haltering 19 hintergreift, sondern auch am Schaft 18 des Halteelements 8 sowie an dessen Fuß 20 passend anliegt. Die äußere Kante des Halterings 19 ist für ein leichteres Aufstecken des Saugnapfs 5 auf das Halteelement 8 gebrochen.

Wie anhand Figur 2 deutlich zu erkennen ist, steht die Innenfläche des Saugnapfs 5 in Wirkverbindung mit den Unterdruckkammern 21 im Gehäuse 1. Über den Absaugkanal 12 evakuiert die Unterdruckkammer 21 den Längskanal 13, an den sich die Dichteinlage 14 des Gurtkörpers 6 dichtend anschmiegt, wobei die Unterdruckdurchführung 9 durch den Gurtkörper 6 die Verbindung des Längskanals 13 mit dem Saugkanal 10 im Inneren des Haltelements 8 herstellt, welcher wiederum im Boden 11 des Saugnapfs 5 mündet. Um zu verhindern, dass ein vom Saugnapf 5 angesaugtes Werkstück in Kontakt mit dem Halteelement 8 kommt, sind im Boden des Saugnapfs 5 sternförmig angeordnete Anschlagsnoppen 22 vorgesehen, die von der Mündung des Saugkanals 10 beabstandet sind und einen Anschlag für das transportierte Werkstück bilden.

Rechts und links neben dem Saugnapf 5 sind zwei von Klemmbacken 25 gehaltene Umgriffsleisten 15 vorhanden, die einerseits den Gurtkörper 6 festhalten und so gewährleisten, dass die Dichteinlage 14 in jedem Fall dichtend am Längskanal 13 anliegt, die andererseits aber auch eine Schutzfunktion für den Saugnapf 5 und insbesondere für das Halteelement 8 übernehmen, indem sie aufgrund einer zweifachen Abkantung höher als das Halteelement 8 über die Außenfläche 7 des Gurtkörpers 6 überstehen. Ein gegebenenfalls hochstehendes Blech wird also von den seitlichen Umgriffsleisten 15 abgelenkt und kann infolgedessen mit seiner Kante nicht das Halteelement 8 beschädigen, sondern höchstens den Saugnapf 5 vom Haltelement 8 abziehen. Um die Funktion des Saugnapfs 5 nicht zu stören, stehen die seitlichen Umgriffsleisten 15 andererseits jedoch nicht so weit über die Außenfläche 7 des Gurtkörpers 6 hervor, wie die Anschlagsnoppen 22 des Saugnapfs 5.

Je eine Gleitschicht 23 an den Kontaktflächen des Gurtkörpers 6 mit den seitlichen Umgriffsleisten 15 und mit dem Gehäuse 1 bzw. dessen Gleitfläche 24 verringern die Reibung und den Verschleiß des umlaufenden Saugbands 3.

Es versteht sich, dass das in den Figuren 1 und 2 dargestellte Saugband nur ein Beispiel für die Verwirklichung der Erfindung ist. Insbesondere sind auch andere Ausformungen und Befestigungen des Halteelements sowie andere Formen des Saugnapfs denkbar und im Rahmen der vorliegenden Erfindung möglich. Auch die seitlichen Schutzleisten können beispielsweise am Gurtkörper befestigt sein oder als Profil anstatt als zweifach abgekantetes Blech ausgebildet sein.

### Bezugszeichenliste

- 1: Gehäuse
- 2: Antriebsrad
- 3: Saugband
- 4: Welle
- 5: Saugnapf
- 6: Gurtkörper
- 7: Außenfläche (von 6)
- 8: Halteelement
- 9: Unterdruck-Durchführung
- 10: Saugkanal
- 11: Boden (von 5)
- 12: Absaugkanal
- 13: Längskanal
- 14: Dichteinlage
- 15: Umgriffsleiste
- 16: Riemen
- 17: Zahn
- 18: Schaft
- 19: Haltering
- 20: Fuß
- 21: Unterdruckkammer
- 22: Anschlagsnoppen
- 23: Gleitschicht
- 24: Gleitfläche
- 25: Klemmbacke

## Patentansprüche

1. Saugband für eine Fördervorrichtung zum insbesondere hängenden Transport von Werkstücken, umfassend einen Gurtkörper (6) mit Unterdruck-Durchführungen (9) und eine Anzahl von am Gurtkörper (6) angebrachten Saugnäpfen (5), deren Innenflächen in Wirkverbindung mit den Unterdruck-Durchführungen (9) stehen, wobei
an den Unterdruck-Durchführungen (9) jeweils ein mit dem Gurtkörper fest verbundenes Halteelement (8) für die Saugnäpfe (5) vorhanden ist, wobei die Saugnäpfe (5) durch elastisches Hintergreifen von entsprechenden Ausformungen (19) der Halteelemente (8) lösbar an diesen befestigt sind, **dadurch gekennzeichnet, dass** das Halteelement (8) auf die Außenfläche (7) des Gurtkörpers (6) aufgesetzt ist.

2. Saugband nach Anspruch 1,
**dadurch gekennzeichnet,**
**dass** die Halteelemente (8) jeweils einen Saugkanal (10) enthalten, der einerseits mit der entsprechenden Unterdruck-Durchführung (9) verbunden ist und andererseits im Boden (11) des zugehörigen Saugnapfs (5) mündet.

3. Saugband nach einem der Ansprüche 1 oder 2,
**dadurch gekennzeichnet,**
**dass** die Halteelemente (8) auf die Außenfläche (7) des Gurtkörpers (6) geklebt oder aufgeschweißt sind.

4. Saugband nach Anspruch 3,
**dadurch gekennzeichnet,**
**dass** die Halteelemente (8) und der Gurtkörper (6) außer den Saugnäpfen (5) keine lösbaren Teile aufweisen.

5. Saugband nach einem der Ansprüche 1 bis 4,
**dadurch gekennzeichnet,**
**dass** die Halteelemente (8) einen Schaft (18) und einen demgegenüber vorspringenden Haltering (19) aufweisen, den die Saugnäpfe (5) elastisch hintergreifen.

6. Saugband nach Anspruch 5,
**dadurch gekennzeichnet,**
**dass** die Halteelemente (8) jeweils einen Fuß (20) aufweisen, mit dem sie an der Außenfläche (7) des Gurtkörpers (6) befestigt sind.

7. Saugband nach einem der Ansprüche 2 bis 6,
**dadurch gekennzeichnet,**
**dass** die Böden (11) der Saugnäpfe (5) mit Anschlagselementen (22) für die zu fördernden Werkstücke versehen sind, welche von der Mündung des Saugkanals (10) des zugehörigen Halteelements (8) beabstandet sind.

8. Saugband nach einem der Ansprüche 1 bis 7,
**dadurch gekennzeichnet,**
**dass** es, in Förderrichtung gesehen, seitlich neben den Saugnäpfen (5) widerstandsfähige Schutzleisten (15) aufweist, die höher als die Halteelemente (8), aber weniger hoch als die Saugnäpfe (5) über die Außenfläche (7) des Gurtkörpers (6) überstehen.

## Revendications

1. Bande aspirante pour un dispositif de transport en particulier pour le transport en suspension de pièces à usiner, comprenant un corps de courroie (6) avec des traversées de dépression (9) et un nombre de ventouses (5) montées sur le corps de courroie (6), dont les surfaces intérieures sont en relation active avec les traversées de dépression (9), dans laquelle il y a sur les traversées de dépression (9) respectivement un élément de maintien (8) pour les ventouses, relié de façon fixe au corps de courroie, dans laquelle les ventouses (5) sont fixées de façon mobile par prise élastique arrière de formes correspondantes (19) des éléments de maintien (8) à ces derniers, **caractérisée en ce que** l'élément de maintien (8) est placé sur la surface extérieure (7) du corps de courroie (6).

2. Bande aspirante selon la revendication 1, **caractérisée en ce que** les éléments de maintien (8) comprennent respectivement un canal d'aspiration (10) qui est relié d'une part à la traversée de dépression (9) correspondante et qui débouche d'autre part dans le fond (11) de la ventouse (5) correspondante.

3. Bande aspirante selon l'une des revendications 1 ou 2, **caractérisée en ce que** les éléments de maintien (8) sont collés ou soudés sur la surface extérieure (7) du corps de courroie (6).

4. Bande aspirante selon la revendication 3, **caractérisée en ce que** les éléments de maintien (8) et le corps de courroie (6) à l'exception des ventouses (5) ne présentant pas de pièces détachables.

5. Bande aspirante selon l'une des revendications 1 à 4, **caractérisée en ce que** les éléments de maintien (8) présentent une tige (18) et une bague de maintien (19) saillante par rapport à la tige et derrière laquelle viennent en prise de façon élastique les ventouses (5).

6. Bande aspirante selon la revendication 5 **caractérisée en ce que** les éléments de maintien (8) présentent respectivement un pied (20) avec lequel ils sont fixés à la surface extérieure (7) du corps de courroie (6).

7. Bande aspirante selon l'une des revendications 2 à 6, **caractérisée en ce que** les fonds (11) des ventouses (5) sont munies d'éléments de butée (22) pour les pièces à usiner destinées à être transportées, lesquels sont mis à distance de l'embouchure du canal d'aspiration (10) de l'élément de maintien correspondant (8).

8. Bande aspirante selon l'une des revendications 1 à 7, **caractérisée en ce qu'**elle présente, vu en direction de transport, latéralement à côté des ventouses (5), des barres de protection (15) résistantes, qui, plus hautes que les éléments de maintien (8) mais moins hautes que les ventouses (5) dépassent de la surface extérieure (7) du corps de courroie (6).

## Claims

1. Suction belt for a conveyor apparatus, particularly for the suspended transport of workpieces, comprising a belt body (6) with vacuum ducts (9) and a plurality of suction cups (5) mounted on the belt body (6) with their inner faces operatively connected to the vacuum ducts (9), wherein a retaining element (8) for the suction cups (5) which is firmly connected to the belt body is provided on each of the vacuum ducts (9), the suction cups (5) being detachably fixed on the retaining elements (8) by resiliently engaging behind corresponding projections (19) on the retaining elements (8), **characterised in that** the retaining element (8) is placed onto the outer face (7) of the belt body (6).

2. Suction belt as claimed in Claim 1, **characterised in that** the retaining elements (8) each contain a suction channel (10) which on the one hand is connected to the corresponding vacuum duct (9) and on the other hand opens in the base (11) of the appertaining suction cup (5).

3. Suction belt as claimed in either Claim 1 or Claim 2, **characterised in that** the retaining elements (8) are glued or welded onto the outer face (7) of the belt body (6).

4. Suction belt as claimed in Claim 3, **characterised in that** the retaining elements (8) and the belt body (6) have no detachable parts apart from the suction cups (5).

5. Suction belt as claimed in any one of Claims 1 to 4, **characterised in that** the retaining elements (8) have a stem (18) and a retaining ring (19) which projects relative thereto, which resiliently engage behind the suction cups (5).

6. Suction belt as claimed in Claim 5, **characterised in that** the retaining elements (8) each have a foot (20) with which they are fixed on the outer face (7) of the belt body (6).

7. Suction belt as claimed in any one of Claims 2 to 6, **characterised in that** the bases (11) of the suction cups (5) are provided with stop elements (22) for the workpieces to be transported, the said stop elements being spaced from the mouth of the suction channel (10) of the appertaining retaining element (8).

8. Suction belt as claimed in any one of Claims 1 to 7, **characterised in that** when viewed in the transport direction it has laterally adjacent to the suction cups (5) resistant protective strips (15) which project further than the retaining elements (8) but less far than the suction cups (5) beyond the outer face (7) of the belt body (6).
